# EUROPEAN PATENT APPLICATION

(11) **EP 4 718 336 A1**
(43) Date of publication of application: **01.04.2026**
(21) Application number: 24810115.6
(22) Date of filing: 18.04.2024
(51) Int. Cl.: G06N 5/04, G06F 16/2455, G06F 16/22, G06F 16/28

(54) **INFERENCE ACCELERATION METHOD, DEVICE AND STORAGE MEDIUM**

(30) Priority: 22.05.2023 CN 202310580983
(71) Applicant: Cloud Intelligence Assets Holding (Singapore) Private Limited, Singapore 189554 (SG)
(72) Inventor: LI, Kesen, Beijing 100102 (CN); ZHAO, Dachuan, Beijing 100102 (CN); YOU, Liang, Beijing 100102 (CN)
(74) Representative: Barker Brettell LLP
(86) International application number: PCT/CN2024/088678
(87) International publication number: WO 2024/239868

(57) **Abstract**

Embodiments of the present application provide an inference acceleration method, a device, and a storage medium. It is proposed that an acceleration requirement parameter value corresponding to each to-be-accelerated inference operation in an inference model in a current round of inference process is determined in response to an inference instruction in an inference execution phase, so that a dynamic change of the acceleration requirement parameter value corresponding to each inference operation in the inference execution phase can be perceived in real time, and an appropriate acceleration operator can be adaptively matched for each inference operation based on the dynamic change of the acceleration requirement parameter, ensuring that an appropriate acceleration operator can be matched for each to-be-accelerated inference operation in the inference model in each round of inference process. Compared with a traditional solution in which operator matching is performed in an inference initialization phase and a result is solidified into the inference execution phase, this solution can implement adaptive matching of acceleration operators, thereby supporting complex and variable inference instructions in the inference execution phase and further ensuring inference acceleration performance in each round of inference process.

## Description

The present application claims priority to Chinese Patent Application No. 202310580983.X, filed with the China National Intellectual Property Administration on May 22, 2023 and entitled "INFERENCE ACCELERATION METHOD, DEVICE, AND STORAGE MEDIUM", which is incorporated herein by reference in its entirety.

### TECHNICAL FIELD

The present application relates to the field of artificial intelligence (AI) technologies, and in particular, to an inference acceleration method, a device, and a storage medium.

### BACKGROUND

With the development of fields such as natural language processing and image processing, the MHA (Multi-Head Attention, multi-head attention) mechanism has been widely applied to various inference models, especially an inference model with a bert-like structure.

Currently, a kernel (kernel function on a GPU) is usually matched for each MHA in an inference model in an inference initialization phase, and a generated matching result is solidified and applied in an inference execution phase. That is to say, a corresponding kernel is invoked for each MHA respectively in the inference execution phase based on the solidified matching result, to implement inference acceleration.

With the continuous diversification of inference requirements, inappropriate kernels are often invoked because the foregoing kernel matching manner is excessively rigid, resulting in unstable inference acceleration performance.

### SUMMARY

A plurality of aspects of the present application provide an inference acceleration method, a device, and a storage medium, to improve inference acceleration performance.

An embodiment of the present application provides an inference acceleration method, including:
determining, during running of an inference model, in response to an inference instruction, an acceleration requirement parameter value corresponding to a target inference operation in a current round of inference process;
searching for a target acceleration operator matching the acceleration requirement parameter value; and
invoking the target acceleration operator for the target inference operation in the current round of inference process, to accelerate the target inference operation,
where the target inference operation is any to-be-accelerated inference operation included in the inference model.

Further, the searching for a target acceleration operator matching the acceleration requirement parameter value includes:
searching for, based on attribute description information corresponding to each acceleration operator in an acceleration operator library, an acceleration operator whose attribute description information matches the acceleration requirement parameter value from the acceleration operator library as the target acceleration operator.

Further, the acceleration requirement parameter value includes a parameter value of a first-type parameter required by the target inference operation and a parameter value of a second-type parameter required by the target inference operation, where the first-type parameter is configured as a data value in the attribute description information of each acceleration operator, and the second-type parameter is configured as a data value or a data range in attribute description information of a single acceleration operator. The searching for an acceleration operator whose attribute description information matches the acceleration requirement parameter value from the acceleration operator library as the target acceleration operator includes:
searching for an acceleration operator whose attribute description information matches the parameter value of the first-type parameter required by the target inference operation from the acceleration operator library as a candidate acceleration operator; and
searching for an acceleration operator whose attribute description information matches the parameter value of the second-type parameter required by the target inference operation from the candidate acceleration operator as the target acceleration operator.

Further, the searching for an acceleration operator whose attribute description information matches the parameter value of the first-type parameter required by the target inference operation from the acceleration operator library as a candidate acceleration operator includes:
constructing, based on the parameter value of the first-type parameter required by the target inference operation, a query key corresponding to the target inference operation; and
determining, based on a mapping relationship between an identifier of an acceleration operator and a query key, the candidate acceleration operator corresponding to the target inference operation.

Further, the searching for an acceleration operator whose attribute description information matches the parameter value of the second-type parameter required by the target inference operation from the candidate acceleration operator as the target acceleration operator includes:
determining a first candidate acceleration operator in whose attribute description information the second-type parameter is configured as a data value consistent with the parameter value of the second-type parameter required by the target inference operation as the target acceleration operator.

Further, the method further includes:
if there is no first candidate acceleration operator, determining a second candidate acceleration operator in whose attribute description information the second-type parameter is configured as a data range including the parameter value of the second-type parameter required by the target inference operation as the target acceleration operator.

Further, a special identifier is used in the attribute description information to refer to the data range, and the method further includes:
if the second-type parameter in the attribute description information corresponding to the acceleration operator is the preset identifier, determining that the second-type parameter of the acceleration operator is configured as the data range.

Further, the target inference operation includes a multi-head attention computing operation, the first-type parameter includes a head size, and the second-type parameter includes a sequence length.

Further, the query key adopts a hash key, and the mapping relationship between the identifier of the acceleration operator and the query key key is represented by a hash map.

An embodiment of the present application further provides a computing device, including a memory, a processor, and a communication component;
the memory is configured to store one or more computer instructions;
the processor is coupled to the memory and the communication component, and is configured to execute the one or more computer instructions to perform the foregoing inference acceleration method.

An embodiment of the present application further provides a computer-readable storage medium storing computer instructions. When the computer instructions are executed by one or more processors, the one or more processors are caused to perform the foregoing inference acceleration method.

In the embodiments of the present application, it is proposed that an acceleration requirement parameter value corresponding to each to-be-accelerated inference operation in the inference model in the current round of inference process is determined in response to an inference instruction in an inference execution phase, so that a dynamic change of the acceleration requirement parameter value corresponding to each inference operation in the inference execution phase can be perceived in real time, and an appropriate acceleration operator can be adaptively matched for each inference operation based on the dynamic change of the acceleration requirement parameter , ensuring that an appropriate acceleration operator can be matched for each to-be-accelerated inference operation in the inference model in each round of inference process. Compared with a traditional solution in which operator matching is performed in an inference initialization phase and a result is solidified into the inference execution phase, this solution can implement adaptive matching of acceleration operators, thereby supporting complex and variable inference instructions in the inference execution phase and further ensuring inference acceleration performance in each round of inference process.

### BRIEF DESCRIPTION OF DRAWINGS

The drawings described herein are used to provide a further understanding of the present application and constitute a part of the present application. Example embodiments of the present application and descriptions thereof are intended to explain the present application, and do not constitute any inappropriate limitation on the present application. In the drawings:
FIG. 1 is a schematic flowchart of an inference acceleration method provided by an exemplary embodiment of the present application.
FIG. 2 is a schematic logic diagram of an inference acceleration method provided by an exemplary embodiment of the present application.
FIG. 3 is a schematic diagram of an application scenario provided by an exemplary embodiment of the present application.
FIG. 4 is a schematic structural diagram of a computing device provided by another exemplary embodiment of the present application.

### DESCRIPTION OF EMBODIMENTS

To make objectives, technical solutions, and advantages of the present application clearer, the following describes the technical solutions of the present application clearly and completely with reference to specific embodiments of the present application and corresponding accompanying drawings. Apparently, the described embodiments are merely some rather than all of the embodiments of the present application. All other embodiments obtained by a person of ordinary skill in the art based on the embodiments of the present application without creative efforts shall fall within the protection scope of the present application.

Inference is a process of making a prediction with a trained model. In this specification, a model for inference is referred to as an inference model. The inference model may be a neural network model, a machine learning model, or the like. With the continuous development of inference requirements, scale and complexity of the inference model are also continuously increasing. To ensure inference efficiency, an inference acceleration technology emerges. However, currently, the matching manner of acceleration operators is excessively rigid, resulting in unstable inference acceleration performance. To this end, it is proposed in some embodiments of the present application that an acceleration requirement parameter value corresponding to each to-be-accelerated inference operation in an inference model in a current round of inference process is determined in response to an inference instruction in an inference execution phase, so that a dynamic change of the acceleration requirement parameter value corresponding to each inference operation in the inference execution phase can be perceived in real time, and an appropriate acceleration operator can be adaptively matched for each inference operation based on the dynamic change of the acceleration requirement parameter, ensuring that an appropriate acceleration operator can be matched for each to-be-accelerated inference operation in the inference model in each round of inference process. Compared with a traditional solution in which operator matching is performed in an inference initialization phase and a result is solidified into the inference execution phase, this solution can implement adaptive matching of acceleration operators, thereby supporting complex and variable inference instructions in the inference execution phase and further ensuring inference acceleration performance in each round of inference process.

The following describes the technical solutions provided in the embodiments of the present application in detail with reference to the accompanying drawings.

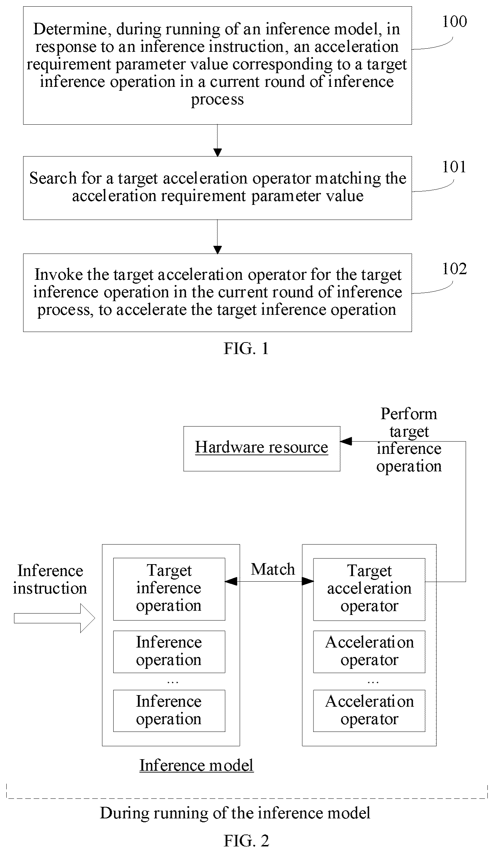

FIG. 1 is a schematic flowchart of an inference acceleration method provided by an exemplary embodiment of the present application. The method may be performed by an inference acceleration engine. The inference acceleration engine may be implemented as software, hardware, or a combination of software and hardware. The inference acceleration engine may be integrated in a computing device. Refer to FIG. 1. The method may include the following steps:
Step 100: determine, during running of an inference model, in response to an inference instruction, an acceleration requirement parameter value corresponding to a target inference operation in a current round of inference process, where acceleration requirement parameter values corresponding to the target inference operation in different inference processes are not exactly the same;
Step 101: search for a target acceleration operator matching the acceleration requirement parameter value;
Step 102: invoke the target acceleration operator for the target inference operation in the current round of inference process, to accelerate the target inference operation;
where the target inference operation is any to-be-accelerated inference operation included in the inference model.

The inference acceleration method provided in this embodiment may be applied to various scenarios requiring inference acceleration, such as artificial intelligence inference scenarios like a natural language processing scenario or an image processing scenario, and the application scenario is not limited in this embodiment. Inference functions carried by the inference model may be deployed as needed in different application scenarios. For example, an inference function carried by the inference model in the natural language processing scenario may be a voice recognition function, a chat function, a translation function, or the like. For another example, an inference function carried by the inference model in the image processing scenario may be a target detection function, an image segmentation function, or the like. Internal model logic of the inference model is not limited in this embodiment. In addition, an inference mechanism used by the inference model is not limited in this embodiment. Typically, the inference model may use an attention mechanism (Attention), a self-attention mechanism (Self-Attention), a multi-head attention mechanism (Multi-Head Self-Attention, MHA), or the like. The multi-head self-attention mechanism MHA is a sequence processing algorithm in the field of artificial intelligence. This algorithm implements memory management and context association on a processed sequence using a "multi-head" structure during sequence processing, to achieve good sequence understanding effects.

The inference acceleration method provided in this embodiment may be used as an innovative function of the inference acceleration engine. A deployment location of the inference acceleration engine is not limited in this embodiment. The inference acceleration engine may be deployed on a cloud server, or certainly, may be deployed at other locations at which inference acceleration is required, for example, an enterprise computer room, among others. Currently, the inference acceleration engine may optimize, based on IaaS (Infrastructure as a Service, i.e., infrastructure as a service) resources, inference models built on various mainstream artificial intelligence (Artificial Intelligence, AI) computing frameworks, and can significantly improve inference performance. The essence of inference acceleration is heterogeneous acceleration, which may be understood as assigning inference tasks to hardware resources for inference acceleration (which may also be referred to as heterogeneous acceleration devices) for execution, rather than being executed by a CPU. This is because compared with the CPU, such hardware resources have hardware and software attributes more suitable for execution of inference tasks. In this embodiment, the hardware resource for inference acceleration may include but is not limited to a GPU (GraphicsProcessing Unit, graphics processing unit), an NPU (NeuralNetworks Process Units, neural network processing unit), or the like. This is not limited in this embodiment.

In this embodiment, an arithmetic operation at each network layer during running of the inference model is referred to as an inference operation. The network layer herein may include but is not limited to a convolutional layer, a pooling layer, and the like. The essence of the inference model is a type of neural network model. Basic knowledge of the neural network model is not elaborated herein. It should be noted that in this embodiment, it is considered that not all inference operations in the inference model need to be accelerated, and instead, what is mainly focused on this embodiment are the to-be-accelerated inference operations, that is, those inference operations that need to be performed on the hardware resources for inference acceleration. Following the foregoing various inference mechanisms that may be adopted by the inference model, the to-be-accelerated inference operations herein may mainly include those inference operations for implementing the inference mechanisms, for example, a multi-head attention computing operation. This is not limited in this embodiment.

In this embodiment, a function running on the hardware resources for inference acceleration is described as an acceleration operator. For example, for the GPU, a function running on the GPU is a kernel function (kernel). Therefore, a typical implementation form of the acceleration operator in this embodiment may be the kernel. Certainly, the acceleration operator in this embodiment may alternatively adopt an implementation form adapted to another type of hardware resource, and is not limited thereto.

FIG. 2 is a schematic logic diagram of an inference acceleration method provided by an exemplary embodiment of the present application. Refer to FIG. 2, in this embodiment, a plurality of different acceleration operators may be provided. The acceleration operators may implement the inference operations in the inference model on the hardware resources for inference acceleration, to accelerate the inference operations. It should be understood that such acceleration is relative to speeds of execution of the inference operations on the CPU. In other words, speeds of execution of the inference operations on the hardware resources for inference acceleration are higher than the speeds of execution of the inference operations on the CPU.

In this embodiment, acceleration policies in different acceleration operators are different, so that different acceleration operators are applicable to different acceleration requirements. Therefore, this embodiment proposes a brand-new technical concept for matching an acceleration operator to an inference operation.

Refer to FIG. 1, in step 100, the acceleration requirement parameter value corresponding to the target inference operation in the current round of inference process may be determined in response to the inference instruction during running of the inference model. The acceleration requirement parameter value is used to indicate an attribute that an acceleration operator required by the target inference operation should have. In an actual application, the inference instruction may include overall acceleration requirement description information for the inference model, and an acceleration requirement parameter value corresponding to each inference operation in the inference model in the current round of inference process may be determined based on the overall acceleration requirement description information. Relevant logic involved in this process may be preset in the inference model. In other words, the inference model itself determines the acceleration requirement parameter value corresponding to each inference operation included in the inference model in the current round of inference process. In this case, in step 100, the acceleration requirement parameter value corresponding to the target inference operation in the current round of inference process may be obtained from the inference model. Certainly, in some other possible designs, the relevant logic involved in the foregoing process may alternatively be implemented using the inference acceleration method provided in this embodiment, to obtain the acceleration requirement parameter value corresponding to the target inference operation in the current round of inference process. This is not limited in this embodiment.

A plurality of inference instructions may be received during running of the inference model, a single inference instruction may trigger a round of inference process, and in a round of inference process, all the inference operations included in the inference model are triggered to be executed. For ease of describing the technical solution, in this embodiment, the target inference operation in the inference model is used as an example to describe the inference acceleration solution starting from step 100. The target inference operation may be any to-be-accelerated inference operation included in the inference model. In addition, it should be understood that inference acceleration may also be implemented on other to-be-accelerated inference operations in the inference model according to the same inference acceleration logic, to ensure acceleration performance in the current round of inference process.

In this embodiment, it is innovatively proposed that the acceleration requirement parameter value corresponding to each to-be-accelerated inference operation in the inference model in the current round of inference process is determined in response to the inference instruction during running of the inference model, that is, in an inference execution phase. With the continuous diversification of inference requirements, taking the target inference operation as an example, acceleration requirement parameter values corresponding to the target inference operation in different inference processes are not exactly the same, and may change dynamically.

For example, in the case that the inference function of the inference model is the chat function, a query statement in a current inference instruction may be "What day is today?", while a query statement in a next inference instruction may be "Please recommend three highly popular restaurants within a five-kilometer radius nearby". Apparently, the query statements in the two inference instructions are totally different, so that acceleration requirement parameter values corresponding to the target inference operation in the two rounds of inference processes are different.

As mentioned above, different acceleration operators are applicable to different acceleration requirements. Therefore, it is proposed in this embodiment that in step 101, the target acceleration operator matching the acceleration requirement parameter value may be searched for. The acceleration requirement parameter value corresponding to the target inference operation may change dynamically. Therefore, a target acceleration operator matching the acceleration requirement parameter value of the target inference operation is searched for in real time for the target inference operation in each round of inference process, which can implement adaptive matching between the inference operation and the acceleration operator, ensuring that the acceleration operator matched to the target inference operation in each round of inference process is appropriate in the case that the acceleration requirement parameter value changes dynamically.

Based on this, refer to FIG. 1, in step 102, the target acceleration operator may be invoked for the target inference operation in the current round of inference process, to perform the target inference operation on the hardware resource for inference acceleration.

Refer to FIG. 2, in step 102, the CPU may invoke the matched appropriate acceleration operator for each to-be-accelerated inference operation in the inference model in the current round of inference process. Then, these acceleration operators may be used to transfer each to-be-accelerated inference operation to the heterogeneous hardware resource for execution, to accelerate the current round of inference process. In this way, each to-be-accelerated inference operation may obtain the application's acceleration in each round of inference process, ensuring stability of inference acceleration performance.

It is worth noting that the inference acceleration method provided in this embodiment is an innovative function of the inference acceleration engine, and the innovative function can interface and collaborate with other functions of the inference acceleration engine. For example, the inference acceleration engine may fuse the to-be-accelerated inference operations, and use the fused inference operation as the target inference operation in this embodiment, to reduce the number of times of launching acceleration operators, and the like. The other acceleration functions of the inference acceleration engine are not limited in this embodiment.

In summary, in this embodiment, it is proposed that the acceleration requirement parameter value corresponding to each to-be-accelerated inference operation in the inference model in the current round of inference process is determined in response to the inference instruction in the inference execution phase, so that a dynamic change of the acceleration requirement parameter value corresponding to each inference operation in the inference execution phase can be perceived in real time, and an appropriate acceleration operator can be adaptively matched for each inference operation through matching based on the dynamic change of the acceleration requirement parameter, ensuring that an appropriate acceleration operator can be matched for each to-be-accelerated inference operation in the inference model in each round of inference process. Compared with a traditional solution in which operator matching is performed in an inference initialization phase and a result is solidified into the inference execution phase, this solution can implement adaptive matching of acceleration operators, thereby supporting complex and variable inference instructions in the inference execution phase and further ensuring inference acceleration performance in each round of inference process.

In the foregoing or following embodiments, a plurality of implementations may be used to search for the target acceleration operator matching the target inference operation in the current round of inference process.

In an optional implementation, based on attribute description information corresponding to each acceleration operator in an acceleration operator library, an acceleration operator whose attribute description information matches the acceleration requirement parameter value may be searched for from the acceleration operator library as the target acceleration operator.

In this implementation, the attribute description information of the acceleration operator may be configured when the acceleration operator is constructed. The attribute description information may be used to describe a usage restriction of the acceleration operator, that is, may be used to describe under which acceleration requirement the acceleration operator can achieve better acceleration effects. This is because acceleration policies in different acceleration operators are different, and thus acceleration requirements supported by the acceleration operators are not exactly the same. The acceleration requirement parameter value determined for the target inference operation in step 100 can exactly reflect an acceleration requirement of the target inference operation in the current round of inference process. Based on this, in this implementation, an appropriate target acceleration operator may be selected for the target inference operation by comparing the acceleration requirement parameter value with the attribute description information.

In an exemplary matching solution, a query key key may be constructed based on the acceleration requirement parameter value corresponding to the target inference operation, and the target acceleration operator matching the target inference operation may be found based on a mapping relationship between an identifier of an acceleration operator and a query key key. A value of each parameter corresponding to the acceleration requirement parameter value may be extracted in advance from the attribute description information of each acceleration operator, and a corresponding query key key may be generated for each acceleration operator. In an actual application, the foregoing mapping relationship may be implemented using a hash map hashmap, and correspondingly, the query key key may be a hash key hash key. In this way, an appropriate acceleration operator can be efficiently matched for the target inference operation.

With the continuous enrichment and development of acceleration operators, the applicant has found in research process that a part of parameters in attribute description information of an acceleration operator are no longer configured as a single data value, but may be configured as a data range. For example, a part of acceleration operators no longer support only a single sequence length, but may support a general sequence length range. As a result, during matching according to the foregoing exemplary matching solution, correct acceleration operators cannot be matched.

Therefore, this embodiment proposes an improved matching solution. It is proposed in the improved matching solution that the acceleration requirement parameter value may include a parameter value of a first-type parameter required by the target inference operation and a parameter value of a second-type parameter required by the target inference operation, where the first-type parameter is configured as a data value in the attribute description information of each acceleration operator, and the second-type parameter is configured as a data value or a data range in attribute description information of a single acceleration operator. Based on this, in the improved matching solution:
an acceleration operator whose attribute description information matches the parameter value of the first-type parameter required by the target inference operation may be searched for from the acceleration operator library as a candidate acceleration operator; and
an acceleration operator whose attribute description information matches the parameter value of the second-type parameter required by the target inference operation may be searched for from the candidate acceleration operator as the target acceleration operator.

In the improved matching solution, a matching process is divided into two phases. In the first phase, a part of acceleration operators may be preliminarily selected from the acceleration operator library as candidate acceleration operators based on the first-type parameter. In the second phase, the most appropriate acceleration operator may be filtered out from the candidate acceleration operators as the target acceleration operator based on the second-type parameter.

In the first phase, the matching idea in the foregoing exemplary matching solution continues to be used: constructing, based on the parameter value of the first-type parameter required by the target inference operation, a query key key corresponding to the target inference operation; and determining, based on a mapping relationship between an identifier of an acceleration operator and a query key key, an identifier of an acceleration operator corresponding to the target inference operation, to find the candidate acceleration operator. In other words, in the first phase, only the parameter value of the first-type parameter required by the target inference operation is used as a filtering basis, so that the candidate acceleration operator satisfying the filtering basis can be filtered out from the acceleration operator library. Similarly, in the first phase, the query key key may adopt a hash key hashkey, and the mapping relationship between the identifier of the acceleration operator and the query key key may be represented by a hash map hashmap.

In the second phase, a matching degree between the candidate acceleration operator and the target inference operation may be evaluated based on the second-type parameter. Optionally, a first candidate acceleration operator in whose attribute description information the second-type parameter is configured as a data value consistent with the parameter value of the second-type parameter required by the target inference operation may be determined as the target acceleration operator. As mentioned above, the second-type parameter in attribute description information of some acceleration operators may be configured as data ranges. Therefore, in the second phase, the following determining logic may be added: if there is no first candidate acceleration operator meeting the foregoing requirement, a second candidate acceleration operator, in whose attribute description information the second-type parameter is configured as a data range including the parameter value of the second-type parameter required by the target inference operation, is determined as the target acceleration operator.

In an actual application, a single candidate acceleration operator may be evaluated in the foregoing two dimensions, to determine whether the evaluated candidate acceleration operator can be used as the target acceleration operator.

Any candidate acceleration operator is used as an example. Whether a second-type parameter of the candidate acceleration operator is configured as a data value and whether the data value is consistent with the parameter value of the second-type parameter required by the target inference operation are first determined. If so, the candidate acceleration operator may be directly determined as the target acceleration operator; or if not, whether the second-type parameter of the candidate acceleration operator is configured as a data range may continue to be determined. If so, the candidate acceleration operator may also be determined as the target acceleration operator. In addition, to ensure uniqueness of the target acceleration operator, in the determining logic, when there are a plurality of acceleration operators consistent with the determining logic, an acceleration operator whose second-type parameter is configured as a data value may be selected from the acceleration operators as a final target acceleration operator. The final optimal selection mechanism mainly considers that compared with an acceleration operator whose second-type parameter is configured as a data range, an acceleration operator whose second-type parameter is configured as a data value has a more focused acceleration policy and better acceleration performance.

In addition, to better support the foregoing two matching phases, in the improved matching solution, a two-layer storage manner may be used to store the attribute description information: the first-type parameter in the attribute description information may be stored using the foregoing mapping relationship, and the second-type parameter in the attribute description information may be separately stored. In an actual application, a two-layer storage structure of a hash map hashmap-array array may be used, where the hash map may be used to storage the mapping relationship between an identifier of an acceleration operator and a query key key, and the array array may be used to store a second-type parameter of each acceleration operator.

Further, in the improved matching solution, a preset identifier may also be used in the attribute description information to refer to the data range. In other words, when the second-type parameter of the acceleration operator is configured as the data range, the second-type parameter in the attribute description information of the acceleration operator may be recorded as the preset identifier. In addition, in an actual application, the data range is usually a universal range, that is, it may cover any parameter value of the second-type parameter. Based on this, in the determining logic in the foregoing second phase, if the second-type parameter in the attribute description information corresponding to the candidate acceleration operator is the preset identifier, and there is no other candidate acceleration operator whose second-type parameter is configured as a data value consistent with the parameter value of the second-type parameter required by the target inference operation, the candidate acceleration operator may be determined as the target acceleration operator. If the second-type parameter in the attribute description information corresponding to the candidate acceleration operator is the preset identifier, it indicates that the second-type parameter of the candidate acceleration operator is configured as the data range.

In this way, the reference of the preset identifier avoids data range analysis, which may greatly reduce the computational load consumed by the determining logic.

In summary, in this embodiment, a representation manner of the second-type parameter in the attribute description information of the acceleration operator is redesigned, a storage structure of the attribute description information is improved, and the matching process of the acceleration operator is improved, so that representation, storage, and optimal search of more types of acceleration operators can be implemented, improving the inference acceleration performance for the inference model.

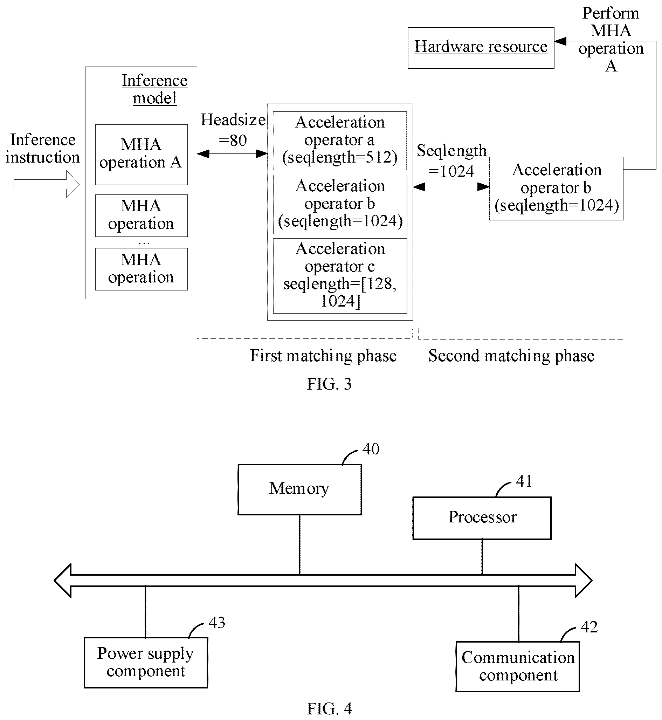

FIG. 3 is a schematic diagram of an application scenario provided by an exemplary embodiment of the present application. Refer to FIG. 3, the inference model uses the MHA mechanism. During running of the inference model, one inference instruction is received, where it is specified in the inference instruction that an overall head size headsize is 160 and a sequence length seqlength of an input query statement is 1024. The inference instruction may trigger the current round of inference process.

The inference model may include a plurality of MHA operations. An operation A in the plurality of MHA operations is used as an example. Acceleration requirement parameter values headsize=80 and seqlength=1024 of the operation A in the current round of inference process may be determined. It should be understood that acceleration requirement parameter values of the operation A in a previous or next round of inference process may be different.

Based on this, headsize=80 may be stored in a hash key hashkey, and a search may be performed in a hash map hashmap via the hashkey (the hashmap includes a mapping relationship between an ID of an acceleration operator and a hash key hashkey, and the hash key hashkey in the hashmap is pre-constructed based on the headsize supported by each acceleration operator). Hash query is quite fast. Therefore, in this matching phase, each candidate acceleration operator supporting headsize=80 may be fast filtered out from the acceleration operator library for the operation A. Refer to FIG. 3, three candidate acceleration operators may be filtered out after this matching phase, i.e., an acceleration operator a, an acceleration operator b, and an acceleration operator c.

After the foregoing first matching phase is completed, the acceleration requirement parameter value seqlength=1024 continues to be used to perform a second matching phase. Refer to FIG. 3, the acceleration operator a supports seqlength=512, the acceleration operator b supports seqlength=1024, and the acceleration operator c supports seqlength=[128, 1024], which is a general sequence size. Based on this, in the second matching phase, the following determining logic may be performed for each candidate acceleration operator: first determining whether the seqlength of the candidate acceleration operator is a data value and whether the data value is equal to 1024; and if so, directly determining the candidate acceleration operator as the target acceleration operator; or if not, continuing to determining whether the seqlength of the candidate acceleration operator is the preset identifier; and if so, determining the candidate acceleration operator as the target acceleration operator. In addition, if there are a plurality of acceleration operators consistent with the determining logic, an acceleration operator whose seqlength is configured as a data value is selected from the acceleration operators as a final target acceleration operator.

After the foregoing determining logic, the acceleration operator b may be selected as a target acceleration operator matching the operation A in the current round of inference process.

If the seqlength corresponding to the operation A is 128, after the foregoing determining logic, the acceleration operator c is selected as a target acceleration operator matching the operation A in the current round of inference process.

It can be seen that according to the inference acceleration method provided in this embodiment, an appropriate acceleration operator may be adaptively matched for each to-be-accelerated inference operation in the inference model in the inference execution phase, so that a dynamically changeable acceleration requirement of the inference operation in the inference execution phase can be supported, ensuring adequate inference acceleration performance in each round of inference process.

It should be noted that some procedures described in the foregoing embodiments and the accompanying drawings include a plurality of operators appearing in a specific order. However, it should be clearly understood that these operations may not be performed in the order they appear herein or performed in parallel. Sequence numbers of the operations, for example, 101 and 102, are merely for distinguishing between different operations, and the serial numbers themselves do not represent any execution order. In addition, these procedures may include more or fewer operations, and these operations may be performed in sequence or in parallel. It should be noted that descriptions such as "first" and "second" herein are for distinguishing different parameter types, candidate operators, and the like, do not represent a sequential order, and do not limit "first" and "second" to be of different types.

FIG. 4 is a schematic structural diagram of a computing device provided by another exemplary embodiment of the present application. As shown in FIG. 4, the computing device includes a memory 40, a processor 41 and a communication component 42.

The processor 41 is coupled to the memory 40, and is configured to execute a computer program in the memory 40, to:
determine, during running of an inference model, in response to an inference instruction, an acceleration requirement parameter value corresponding to a target inference operation in a current round of inference process;
search for a target acceleration operator matching the acceleration requirement parameter value; and
invoke the target acceleration operator for the target inference operation in the current round of inference process, to accelerate the target inference operation,
where the target inference operation is any to-be-accelerated inference operation included in the inference model.

In an optional embodiment, when searching for the target acceleration operator matching the acceleration requirement parameter value, the processor 41 may be specifically configured to:
search for, based on attribute description information corresponding to each acceleration operator in an acceleration operator library, an acceleration operator whose attribute description information matches the acceleration requirement parameter value from the acceleration operator library as the target acceleration operator.

In an optional embodiment, the acceleration requirement parameter value includes a parameter value of a first-type parameter required by the target inference operation and a parameter value of a second-type parameter required by the target inference operation, where the first-type parameter is configured as a data value in the attribute description information of each acceleration operator, and the second-type parameter is configured as a data value or a data range in attribute description information of a single acceleration operator. When searching for the acceleration operator whose attribute description information matches the acceleration requirement parameter value from the acceleration operator library as the target acceleration operator, the processor 41 may be specifically configured to:
search for an acceleration operator whose attribute description information matches the parameter value of the first-type parameter required by the target inference operation from the acceleration operator library as a candidate acceleration operator; and
search for an acceleration operator whose attribute description information matches the parameter value of the second-type parameter required by the target inference operation from the candidate acceleration operator as the target acceleration operator.

In an optional embodiment, when searching for the acceleration operator whose attribute description information matches the parameter value of the first-type parameter required by the target inference operation from the acceleration operator library as the candidate acceleration operator, the processor 41 may be specifically configured to:
construct, based on the parameter value of the first-type parameter required by the target inference operation, a query key key corresponding to the target inference operation; and
determine, based on a mapping relationship between an identifier of an acceleration operator and a query key key, an identifier of an acceleration operator corresponding to the target inference operation, to find the candidate acceleration operator.

In an optional embodiment, when searching for the acceleration operator whose attribute description information matches the parameter value of the second-type parameter required by the target inference operation from the candidate acceleration operator as the target acceleration operator, the processor 41 may be specifically configured to:
determine a first candidate acceleration operator, in whose attribute description information the second-type parameter is configured as a data value consistent with the parameter value of the second-type parameter required by the target inference operation, as the target acceleration operator.

In an optional embodiment, the processor 41 may be further configured to:
if there is no first candidate acceleration operator, determine a second candidate acceleration operator, in whose attribute description information the second-type parameter is configured as a data range including the parameter value of the second-type parameter required by the target inference operation, as the target acceleration operator.

In an optional embodiment, a preset identifier is used in the attribute description information to refer to the data range. The processor 41 may be further configured to:
if the second-type parameter in the attribute description information corresponding to the first candidate acceleration operator is the preset identifier, determine that the second-type parameter of the first candidate acceleration operator is configured as the data range.

In an optional embodiment, the target inference operation includes a multi-head attention computing operation, the first-type parameter includes a head size headsize, and the second-type parameter includes a sequence length seq-length.

In an optional embodiment, the query key key adopts a hash key hashkey, and the mapping relationship between the identifier of the acceleration operator and the query key key is represented by a hash map hashmap.

Further, as shown in FIG. 4, the computing device further includes a power supply component 43 and other components. FIG. 4 schematically shows only a part of components, and this does not mean that the computing device includes only the components shown in FIG. 4.

It should be noted that for technical details in each embodiment about the computing device, refer to the related descriptions in the foregoing method embodiment. For the sake of brevity, details are not described herein again, but this should not narrow the protection scope of the present application.

Correspondingly, an embodiment of the present application further provides a computer-readable storage medium storing a computer program. When the computer program is executed, the steps performed by the computing device in the foregoing method embodiments can be implemented.

The memory in FIG. 4 is configured to store the computer program, and may be configured to store various other data to support operations on a computing platform. Examples of such data include instructions for any applications or methods operated on the computing platform, contact data, phonebook data, messages, images, and videos. The memory may be implemented by any type of volatile or non-volatile storage device or a combination thereof, for example, a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The communication component in FIG. 4 is configured to facilitate wired or wireless communication between the device in which the communication component is located and another device. The device in which the communication component is located may access a communication standard-based wireless network, for example, mobile communication networks such as a Wi-Fi, 2G, 3G, 4G/LTE, or 5G network, or a combination thereof. In an exemplary embodiment, the communication component receives a broadcast signal or broadcast related information from an external broadcast management system through a broadcast channel. In an exemplary embodiment, the communication component further includes a near field communication (NFC) module, to facilitate short-range communication. For example, the NFC module may be implemented based on a radio frequency identification (RFID) technology, an infrared data association (IrDA) technology, an ultra-wide band (UWB) technology, a Bluetooth (BT) technology, and another technology.

The power supply component in FIG. 4 provides power for various components of the device in which the power supply component is located. The power supply component may include a power management system, one or more power supplies, and other components associated with generation, management and distribution of power for the device in which the power supply component is located.

A person skilled in the art should understand that the embodiments of the present application may be provided as a method, a system, or a computer program product. Therefore, the present application may take a form of a hardware-only embodiment, a software-only embodiment, or an embodiment with a combination of software and hardware. In addition, the present application may take a form of a computer program product that is implemented on one or more computer-usable storage media (including but not limited to a disk memory, a CD-ROM, an optical memory, and the like) that include computer-usable program code.

The present application is described with reference to the flowcharts and/or block diagrams of the method, the device (system), and the computer program product according to the embodiments of the present application. It should be understood that each procedure and/or each block in the flowcharts and/or the block diagrams and a combination of procedures and/or blocks in the flowcharts and/or the block diagrams may be implemented by computer program instructions. These computer program instructions may be provided to a general-purpose computer, a dedicated computer, an embedded processor, or a processor of any other programmable data processing device to generate a machine, so that the instructions executed by a processor of a computer or any other programmable data processing device generate an apparatus for implementing a function specified in one or more procedures in the flowcharts and/or in one or more blocks in the block diagrams.

These computer program instructions may alternatively be stored in a computer-readable memory that can direct the computer or other programmable data processing device to work in a specific manner, so that the instructions stored in the computer-readable memory generate an article that includes an instruction apparatus. The instruction apparatus implements a function specified in one or more procedures in the flowcharts and/or in one or more blocks in the block diagrams.

These computer program instructions may alternatively be loaded onto a computer or other programmable data processing device, so that a series of operations and steps are performed on the computer or the other programmable device, thereby generating computer-implemented processing. Therefore, the instructions executed on the computer or other programmable device provide steps for implementing a function specified in one or more procedures in the flowcharts and/or in one or more blocks in the block diagrams.

It should be noted that the terms "include" and "comprise" or any other variant thereof is intended to cover a non-exclusive inclusion, so that a process, a method, a commodity, or a device including a series of elements not only includes those elements but also includes other elements that are not expressly listed, or further includes elements inherent to such process, method, commodity, or device. In the absence of more limitations, an element defined by the statement "including a..." does not preclude existence of additional identical elements in the process, method, commodity, or device that includes the element.

It should be noted that user information (including but not limited to user equipment information, user personal information, and the like) and data (including but not limited to data for analysis, stored data, displayed data, and the like) involved in the present application are all information and data authorized by users or fully authorized by all parties, collection, use, and processing of relevant data need to comply with relevant laws, regulations, and standards of relevant countries and regions, and corresponding operation entries are provided for users to select to authorize or reject.

The foregoing descriptions are only embodiments of the present application, and are not intended to limit the present application. For a person skilled in the art, the present application may have various modifications and variations. Any modification, equivalent replacement, and improvement made within the spirit and principle of the present application shall fall within the protection scope of the present application.

## Claims

1. An inference acceleration method, comprising:
determining, during running of an inference model, in response to an inference instruction, an acceleration requirement parameter value corresponding to a target inference operation in a current round of inference process;
searching for a target acceleration operator matching the acceleration requirement parameter value; and
invoking the target acceleration operator for the target inference operation in the current round of inference process, to accelerate the target inference operation,
wherein the target inference operation is any to-be-accelerated inference operation comprised in the inference model.

2. The method according to claim 1, wherein the searching for a target acceleration operator matching the acceleration requirement parameter value comprises:
searching for, based on attribute description information corresponding to each acceleration operator in an acceleration operator library, an acceleration operator whose attribute description information matches the acceleration requirement parameter value from the acceleration operator library as the target acceleration operator.

3. The method according to claim 2, wherein the acceleration requirement parameter value comprises a parameter value of a first-type parameter required by the target inference operation and a parameter value of a second-type parameter required by the target inference operation, wherein the first-type parameter is configured as a data value in the attribute description information of each acceleration operator, and the second-type parameter is configured as a data value or a data range in attribute description information of a single acceleration operator; and the searching for an acceleration operator whose attribute description information matches the acceleration requirement parameter value from the acceleration operator library as the target acceleration operator comprises:
searching for an acceleration operator whose attribute description information matches the parameter value of the first-type parameter required by the target inference operation from the acceleration operator library as a candidate acceleration operator; and
searching for an acceleration operator whose attribute description information matches the parameter value of the second-type parameter required by the target inference operation from the candidate acceleration operator as the target acceleration operator.

4. The method according to claim 3, wherein the searching for an acceleration operator whose attribute description information matches the parameter value of the first-type parameter required by the target inference operation from the acceleration operator library as a candidate acceleration operator comprises:
constructing, based on the parameter value of the first-type parameter required by the target inference operation, a query key corresponding to the target inference operation; and
determining, based on a mapping relationship between an identifier of an acceleration operator and a query key, the candidate acceleration operator corresponding to the target inference operation.

5. The method according to claim 3, wherein the searching for an acceleration operator whose attribute description information matches the parameter value of the second-type parameter required by the target inference operation from the candidate acceleration operator as the target acceleration operator comprises:
determining a first candidate acceleration operator in whose attribute description information the second-type parameter is configured as a data value consistent with the parameter value of the second-type parameter required by the target inference operation as the target acceleration operator.

6. The method according to claim 5, further comprising:
if there is no first candidate acceleration operator, determining a second candidate acceleration operator in whose attribute description information the second-type parameter is configured as a data range comprising the parameter value of the second-type parameter required by the target inference operation as the target acceleration operator.

7. The method according to claim 6, wherein a preset identifier is used in the attribute description information to refer to the data range, and the method further comprises:
if the second-type parameter in the attribute description information corresponding to the acceleration operator is the preset identifier, determining that the second-type parameter of the acceleration operator is configured as the data range.

8. The method according to claim 3, wherein the target inference operation comprises a multi-head attention computing operation, the first-type parameter comprises a head size, and the second-type parameter comprises a sequence length.

9. The method according to claim 4, wherein the query key adopts a hash key, and the mapping relationship between the identifier of the acceleration operator and the query key is represented by a hash map.

10. A computing device, comprising a memory, a processor, and a communication component, wherein
the memory is configured to store one or more computer instructions; and
the processor is coupled to the memory and the communication component, and is configured to execute the one or more computer instructions to perform the inference acceleration method according to any one of claims 1 to 9.

11. A computer-readable storage medium storing computer instructions, wherein when the computer instructions are executed by one or more processors, the one or more processors are caused to perform the inference acceleration method according to any one of claims 1 to 9.
